# EUROPÄISCHE PATENTSCHRIFT

(11) **EP 2 283 699 B1**
(45) Veröffentlichungstag und Bekanntmachung des Hinweises auf die Patenterteilung: **27.07.2016**
(21) Anmeldenummer: 09749706.9
(22) Anmeldetag: 30.04.2009
(51) Int. Cl.: H05B 6/80, H05B 6/78, H05B 6/68, B29C 49/64

(54) **VORRICHTUNG UND VERFAHREN ZUM GESTEUERTEN ERWÄRMEN VON KUNSTSTOFFBEHÄLTNISSEN**
APPARATUS AND METHOD FOR THE CONTROLLED HEATING OF PLASTIC RECEPTACLES
DISPOSITIF ET PROCÉDÉ DE CHAUFFAGE CONTRÔLÉ DE RÉCIPIENTS EN MATIÈRE SYNTHÉTIQUE

(30) Priorität: 17.05.2008 DE 102008024108
(43) Veröffentlichungstag der Anmeldung: 16.02.2011
(73) Patentinhaber: Krones AG, 93073 Neutraubling (DE)
(72) Erfinder: ZIMMERER, Johann, 93073 Neutraubling (DE); WINKLER, Günter, 93073 Neutraubling (DE); ENGLBRECHT, Rainer, 93073 Neutraubling (DE); APELSMEIER, Andreas, 93073 Neutraubling (DE); SENN, Konrad, 93073 Neutraubling (DE)
(74) Vertreter: Bittner, Bernhard
(86) Internationale Anmeldenummer: PCT/EP2009/055272
(87) Internationale Veröffentlichungsnummer: WO 2009/141216

(56) Entgegenhaltungen:
- WO-A-2006/105769
- WO-A-2007/131701
- US-A- 5 892 208

## Beschreibung

Die vorliegende Erfindung bezieht sich auf eine Vorrichtung und ein Verfahren zum Erwärmen von Kunststoffbehältnissen und insbesondere von Kunststoffvorformlingen. Im Bereich der Getränke herstellenden Industrie ist man verstärkt dazu übergangen, anstelle von Glasflaschen Kunststoffbehältnisse bzw. PET-Behältnisse zu verwenden. Bei der Herstellung dieser Behältnisse werden zunächst Kunststoffvorformlinge zur Verfügung gestellt, diese erwärmt und einem Expansionsprozess zugeführt, um auf diese Weise die fertigen Kunststoffbehältnisse zu erhalten. Dabei ist es im Stand der Technik üblich, die Kunststoffvorformlinge durch eine Heizstrecke laufen zu lassen, innerhalb derer sie üblicherweise mit einer Infrarotstrahlung erwärmt werden.

Daneben ist es aus der WO 2007/131701 A2 auch bekannt, zur Erwärmung der Kunststoffvorformlinge Mikrowellenstrahlung einzusetzen. Dabei wird die Mikrowellenstrahlung mit einer Mikrowellenerzeugungseinrichtung, wie einem Magnetron, erzeugt und anschließend über einen Leitungseinrichtung wie einem Wellenhohlleiter auf die zu erwärmenden Kunststoffvorformlinge geleitet. Die auf die Vorformlinge gelangende Mikrowellenenergie kann dabei mittels Tuning-Einheiten gesteuert werden. Üblicherweise wird dabei die auf die Kunststoffvorformlinge aufgebrachte Leistung vor Inbetriebnahme der Vorrichtung eingestellt und anschließend wird die Vorrichtung mit dieser festgesetzten Leistung betrieben.

Dabei tritt jedoch das Problem auf, dass die auf die Vorformlinge aufgebrachte Mikrowellenenergie auch von der Beschaffenheit der Vorformlinge selbst abhängen kann und damit nicht stets ein gleicher Energieeintrag in die einzelnen Vorformlinge bzw. eine gleiche Erwärmung gewährleistet ist.

Der vorliegenden Erfindung liegt daher die Aufgabe zugrunde, eine Vorrichtung und ein Verfahren zur Verfügung zu stellen, welche einen gleichmäßigen Energieeintrag bzw. eine gleichmäßige Erwärmung der Vorformlinge erlaubt. Dies wird erfindungsgemäß durch eine Vorrichtung nach Anspruch 1 und ein Verfahren nach Anspruch 8 erreicht. Vorteilhafte Ausführungsformen und Weiterbildungen sind Gegenstand der Unteransprüche.

Eine erfindungsgemäße Vorrichtung zum Erwärmen von Kunststoffbehältnissen und insbesondere von Kunststoffvorformlingen weist eine Transporteinrichtung auf, welche die Kunststoffbehältnisse entlang eines vorbestimmten Transportpfades transportiert. Weiterhin ist eine Mikrowellenerzeugungseinrichtung vorgesehen, sowie eine Leitungseinrichtung, welche die Mikrowellen in Richtung der zu erwärmenden Kunststoffbehältnisse leitet, wobei diese Leitungseinrichtung wenigstens teilweise als Hohlleiter ausgeführt ist. Erfindungsgemäß weist die Vorrichtung eine Steuereinrichtung auf, welche derart gestaltet ist, dass sie die auf die Behältnisse treffende Mikrowellenenergie während des Erwärmungsvorgangs steuert und die Steuereinrichtung eine Regeleinrichtung ist, welche die auf die Kunststoffbehältnisse gelangende Mikrowellenenergie in Abhängigkeit, von einer von den Kunststoffbehältnissen zurückgelangenden Mikrowellenenergie regelt, und wobei die Vorrichtung eine Sensoreinrichtung aufweist, welche von den Kunststoffbehältnissen zurückgelangende Mikrowellenenergie misst.

Bei der Transporteinrichtung kann es sich beispielsweise um Transporträder, Transportketten oder dergleichen handeln. An derartigen Transporträdern werden die zu erwärmenden Vorformlinge entlang einer im Wesentlichen kreisförmigen Bahn gerührt.

Die erfindungsgemäße Vorrichtung kann jedoch auch zum Erwärmen von Behältnissen aus anderen Materialien, wie insbesondere zum Erwärmen von Glasflaschen, verwendet werden.

Bei der Mikrowellenerzeugungseinrichtung handelt es sich insbesondere aber nicht ausschließlich um ein Magnetron, wobei die von dem Magnetron erzeugte Mikrowellenenergie bzw. die Mikrowellen über die teilweise als Hohlleiter ausgeführte Leitungseinrichtung den Behältnissen zugeführt wird.

Während im Stand der Technik üblicherweise vor Betriebsbeginn die auf die Behältnisse einwirkende Leistung eingestellt wird, erlaubt die erfindungsgemäße Vorrichtung eine Steuerung bzw. auch Regelung der auf die Behältnisse eintreffende Mikrowellenenergie während des Erwärmungsprozesses. Auf diese Weise ist es möglich, schnell bzw. flexibel auf unterschiedliche physikalische Gegebenheiten wie beispielsweise unterschiedliche Absorptionen unterschiedlicher Vorformlinge zu reagieren. Dabei wird unter einer Steuerung der Mikrowellenenergie verstanden, dass insbesondere auch eine Variation der Mikrowellenenergie während des Erwärmungsvorgangs einzelner Vorformlinge möglich ist.

Bei einer vorteilhaften Ausführungsform weist die Vorrichtung eine Energieabstimmungseinheit auf, welche in einem Bereich der Leitungseinrichtung angeordnet ist und welche die auf die Kunststoffbehältnisse treffende Mikrowellenenergie beeinflusst. Dabei handelt es sich insbesondere um Tuning-Elemente, welche die auf die Mikrowellen auftreffende Mikrowellenenergie variieren.

Bevorzugt wird die auf die Kunststoffbehältnisse treffende Mikrowellenenergie durch die Energieabstimmungseinheit verändert. Es wäre jedoch auch möglich, dass die auf die Kunststoffbehältnisse treffende Mikrowellenenergie dadurch verändert wird, dass Größen der Bewegung der Kunststoffbehältnisse gegenüber der Vorrichtung und insbesondere gegenüber einem Resonator der Mikrowellenerzeugungseinrichtung verändert werden. So könnte beispielsweise durch eine Erhöhung der Bewegungsgeschwindigkeit der Kunststoffbehältnisse gegenüber dem Resonator der Energieeintrag in die Behältnisse verringert werden.

Auch könnten die oben genannten Massnahmen zur Änderung der auf die Kunststoffbehältnisse treffenden Mikrowellenenergie miteinander kombiniert werden.

Bei einer bevorzugten Ausführungsform weist die Energieabstimmungseinheit wenigstens einen in die Leitungseinrichtung ragenden Regulierkörper auf, dessen Position gegenüber dem Innenquerschnitt der Leitungseinrichtung zur Leistungsabstimmung veränderbar ist. Bevorzugt handelt es sich dabei um einen Tuning-Stift oder dergleichen, der in den Hohlleiter hineinragt und dessen Hineinragen verändert werden kann. Je weiter dieser Tuningstift in den Hohlleiter hineinragt, desto mehr wird die auf die Vorformlinge gelangende Mikrowellenenergie abgeschwächt.

Bei einer weiteren vorteilhaften Ausführungsform ist der Regulierkörper mit Hilfe eines Linearmotors gegenüber der Leitungseinrichtung bewegbar. Im Stand der Technik werden zur Bewegung dieses Regulierkörpers bzw. Tuning-Stifts üblicherweise Schrittmotoren eingesetzt. Durch die Verwendung von Linearmotoren ist eine wesentlich schnellere Bewegung des Regulierkörpers möglich, so dass insbesondere auch während des Erwärmungsvorgangs eine schnelle Nachverschiebung des Regulierkörpers und damit eine schnelle Regulierung der auf die Vorformlinge treffenden Leistung durchgeführt werden kann.

Bei einer weiteren vorteilhaften Ausführungsform weist die Vorrichtung einen Resonator zur Erwärmung der Kunststoffbehältnisse auf. Dabei handelt es sich vorzugsweise um einen Resonator, in dessen Innenraum der zu erwärmende Vorformling eingeführt wird und innerhalb dessen er anschließend durch Beaufschlagung mit der Mikrowellenenergie erwärmt wird.

Vorzugsweise bewirkt die Regeleinrichtung, dass die Position des Regulierkörpers der Energieabstimmungseinheit gegenüber der Leitungseinrichtung verändert wird. Bei dieser Ausführungsform gibt die Regeleinrichtung an den Linearmotor bzw. den Antrieb für den Regulierkörper ein Signal aus, mittels dessen die Position des Regulierkörpers verändert wird und somit direkt auf die auf die Kunststoffvorformlinge auftreffende Mikrowellenenergie eingewirkt wird. Damit wird vorgeschlagen, während der Erwärmung mittels eines geschlossenen Regelkreises, die auf die Vorformlinge auftreffende Mikrowellenenergie bevorzugt permanent anzupassen.

Bei einer weiteren vorteilhaften Ausführungsform weist die Energieabstimmungseinheit mehrere Regulierkörper auf, deren Position gegenüber der Leistungseinrichtung veränderbar ist. Vorzugsweise weist die Energieabstimmungseinheit mehrere Regulierkörper auf, deren Position gegenüber der Leitungseinrichtung veränderbar ist. Dabei wird jedoch vorzugsweise lediglich ein derartiger Regulierkörper von der Regeleinrichtung angesteuert, bzw. dessen Position während des Erwärmungsvorgangs der Behältnisse geregelt. Der oder die weiteren Regulierkörper werden vor einem Arbeitsbeginn eingestellt und deren Stellung bevorzugt im weiteren Betrieb beibehalten.

Die vorliegende Erfindung ist weiterhin auf ein Verfahren zum Erwärmen von Kunststoffbehältnissen und insbesondere von Kunststoffvorformlingen gerichtet, wobei die Kunststoffbehältnisse mittels einer Transporteinrichtung entlang eines vorbestimmten Pfads transportiert werden und mittels Mikrowellen erwärmt werden, wobei diese Mikrowellen von einer Mikrowellenerzeugungseinrichtung erzeugt und von einer Leitungseinrichtung zu den Kunststoffbehältnissen geleitet werden. Vorzugsweise werden diese Mikrowellen wenigstens abschnittsweise innerhalb eines Wellenhohlleiters geleitet.

Erfindungsgemäß steuert eine Steuereinrichtung die auf die Kunststoffbehältnisse treffende Mikrowellenenergie während des Erwärmungsvorgangs der Kunsstoffbehältnisse in Abhängigkeit von einer von den Kunststoffbehältnissen zurückgelangenen Mikrowellenenergie steuert, und wobei die Vorrichtung eine Sensoreinrichtung aufweist, welche von den Kunststoffbehältnissen zurückgelangende Mikrowellenenergie misst. Im Gegensatz zum Stand der Technik wird dabei die Mikrowellenenergie während des Erwärmungsvorgangs nicht konstant gehalten, sondern kann flexibel an unterschiedliche physikalische Bedingungen angepasst werden.

Bei einem weiteren bevorzugten Verfahren wird die auf die Behältnisse gelangende Mikrowellenenergie mit Hilfe einer Energieabstimmungseinheit verändert, wobei diese Energieabstimmungseinheit wenigstens einen Regulierkörper aufweist, der in die Leitungseinrichtung hineinragt und zur Veränderung der Mikrowellenenergie die Position dieses Regulierkörpers gegenüber der Leitungseinrichtung verändert wird. Dabei können beispielsweise die Regulierkörper in Reaktion auf zu geringe Leistungsaufnahme durch die Kunststoffbehältnisse weiter aus der Leitungseinrichtung herausgezogen werden, um auf diese Weise die auf die Kunststoffvorformlinge aufzubringende Energie zu erhöhen. Bei einem weiteren bevorzugten Verfahren weist die Energieabstimmungseinheit mehrere Regulierkörper auf, jedoch wird nur die Position eines Teils dieser Regulierkörper und besonders bevorzugt nur genau eines Regulierkörpers gegenüber der Leitungseinrichtung während der Erwärmung der Kunststoffbehältnisse verändert. Auf diese Weise ist eine sehr schnelle und flexible Reaktion der Vorrichtung möglich. Insbesondere müssen bei der Regulierung nicht mehrere möglicherweise wechselwirkende Auswirkungen aufweisende Verfahrensschritte durchgeführt werden.

Weitere Vorteile und Ausführungsformen ergeben sich aus den beigefügten Zeichnungen:

Darin zeigen:
- Fig. 1: eine schematische Darstellung einer Vorrichtung zum Erwärmen von Behältnissen;
- Fig. 2: eine schematische Darstellung einer erfindungsgemäßen Vorrichtung in einer ersten Ausführungsform; und
- Fig. 3: eine schematische Darstellung einer erfindungsgemäßen Vorrichtung in einer zweiten Ausführungsform.

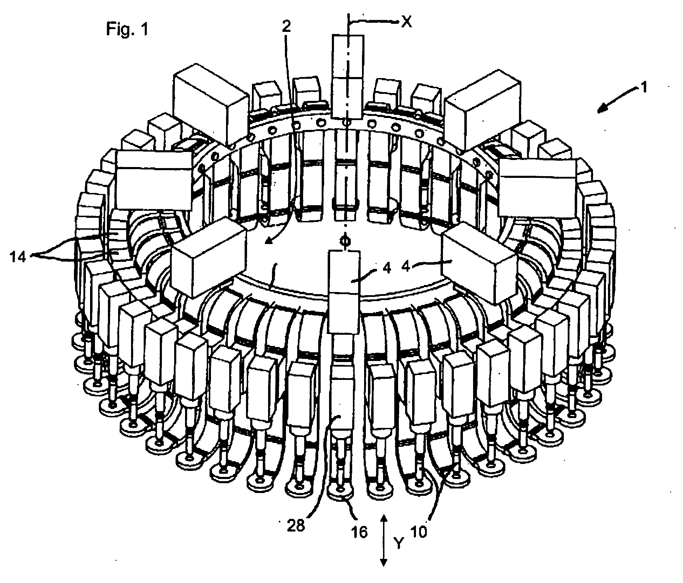

Figur 1 zeigt eine Vorrichtung 1 zum Erwärmen von Behältnissen 10. Dabei weist die Vorrichtung 1 eine Vielzahl von Mikrowellenerzeugungseinrichtungen 4 auf, wobei die von diesen Mikrowellenerzeugungseinrichtungen 4 erzeugten Mikrowellen über Leitungseinrichtungen zu Resonatoren 16 gelangen und von diesen aus in Behältnisse 10, bei denen es sich hier um Vorformlinge handelt, eingebracht werden. Die Vorrichtung kann jedoch auch zum Erwärmen bereits fertig gestellter Kunststoffbehältnisse verwendet werden.

Dabei bezieht sich das Bezugszeichen 2 auf eine Transporteinrichtung, welche bewirkt, dass die einzelnen Behältnisse um eine Drehachse X gedreht werden. Das Bezugszeichen 14 bezieht sich in seiner Gesamtheit auf Energieabstimmungseinheiten, welche die auf die Behältnisse aufgebrachten Energien regulieren. Mit Hilfe von Antriebseinrichtungen 28 kann die Position der Behältnisse 10 gegenüber den Resonatoren 16 in der Richtung Y, welche parallel zu der Drehachse X verläuft, verschoben werden.

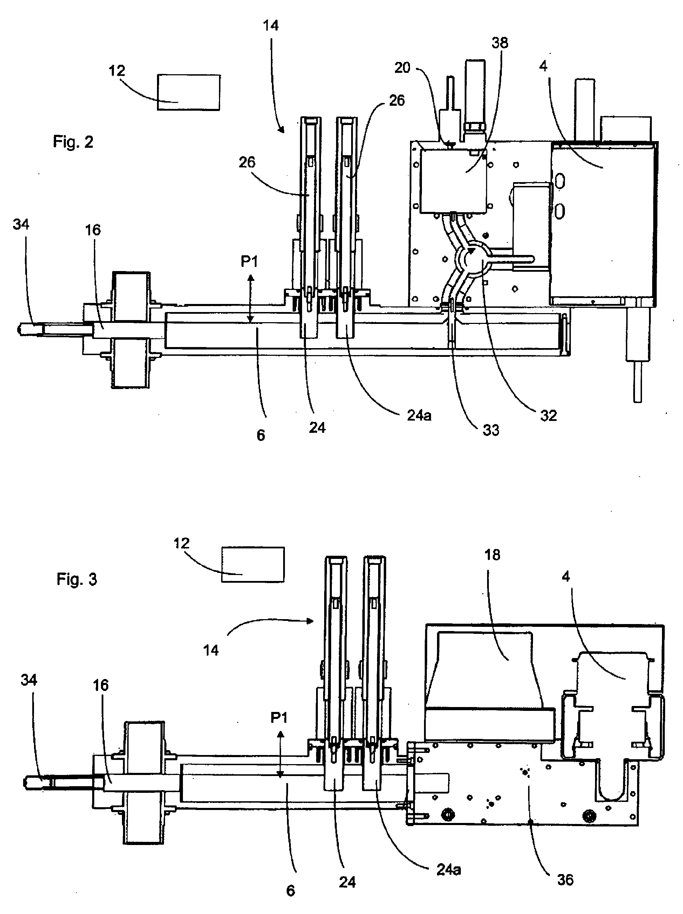

Figur 2 zeigt eine erfindungsgemäße Vorrichtung 1 in einer ersten Ausführungsform. Diese Vorrichtung weist ein Magnetron 4 auf, in welches bereits eine Heizeinrichtung (nicht gezeigt) integriert ist. In diesem Magnetron 4 werden die Mikrowellen erzeugt und in einen Zirkulator 32 geleitet.

Ausgehend von diesem Zirkulator werden die Mikrowellen mit Hilfe einer Einkoppeleinrichtung 33 in eine Leitungseinrichtung 6 in Form eines Mikrowellenhohlleiters bzw. Rechteckhohlleiters eingeleitet. Von dort gelangen die Mikrowellen in einen Resonator 16 bzw. die innerhalb dieses Resonators angeordneten (nicht gezeigten) Behältnisse 10. Die Behältnisse werden hier in Richtung des Pfeils P1 in den Resonator 16 eingeschoben.

Das Bezugszeichen 34 bezieht sich auf ein Pyrometer, welches an dem Resonator angeordnet ist und berührungslos die Temperatur der Vorformlinge misst. Die von den Behältnissen zurück gelangenden Mikrowellen gelangen wiederum in den Zirkulator und von dort in eine Wasserlast 38. Diese Wasserlast 38 dient zum Dämpfen der Mikrowellen. Mit Hilfe einer Sensoreinrichtung 20 in Form einer Diode kann die rücklaufende Mikrowellenenergie gemessen werden. Die gemessenen Werte werden wiederum von einer Steuereinrichtung 12 aufgenommen und zur Leistungsabstimmung verwendet. Es wäre jedoch auch möglich, neben oder anstelle der von der Sensoreinrichtung gemessenen Werte die von dem Pyrometer 34 ausgegebenen Werte zur Leistungs- bzw. Energieabstimmung zu verwenden. Daneben könnte das Pyrometer auch verwendet werden, um die Erwärmungsphase zu verändern.

Das Bezugszeichen 14 bezieht sich in seiner Gesamtheit auf eine Energieabstimmungseinheit, welche hier zwei Antriebe 26 in Form von Linearmotoren aufweist. Weiterhin weist die Energieabstimmungseinheit 14 zwei Regulierkörper bzw. Tuning-Stifte 24, 24a auf, deren Position in Richtung des Pfeils P1 gegenüber dem Hohlleiter 6 verändert werden kann. Die Steuereinrichtung 12 ändert bei Bedarf während des laufenden Betriebs, d. h. der laufenden Erwärmung der Behältnisse, die Position des Regulierkörpers 24 gegenüber dem Rechteckhohlleiter und regelt damit die auf das Behältnis aufgebrachte Mikrowellenenergie. Bei aus dem Stand der Technik bekannten Vorrichtungen werden teilweise wenigstens drei Regulierkörper vorgesehen. Bei den hier vorgeschlagenen Ausführungsformen sind jedoch auch zwei derartige Regulierkörper ausreichend.

Figur 3 zeigt eine erfindungsgemäße Vorrichtung in einer weiteren Ausführungsform. Bei dieser Ausführungsform ist ebenfalls ein Magnetron 4 vorgesehen, hiervon getrennt jedoch eine Heizeinrichtung 18. Das Bezugszeichen 36 bezieht sich hier auf einen Rechteckhohlleiter mit einem integrierten Zirkulator und einer ebenfalls integrierten Wasserlast. Die Einkopplung erfolgt hier von einem Rechteckhohlleiter 36 in den Rechteckhohlleiter 6. Das Bezugszeichen 14 bezieht sich auch hier wieder auf die Leistungsabstimmungseinrichtung, die von der Steuereinrichtung 12 gesteuert wird. Das Vorsehen von Linearmotoren 26 erlaubt ein dynamisches bzw. schnelles Verfahren der Regulierkörper und damit auch die Leistungsregelung im laufenden Betrieb. Als Regelparameter wird die von den Behältnissen reflektierte Leistung verwendet, welche ein Maß für die von den Behältnissen absorbierte Mikrowellenenergie ist. Bevorzugt wird, wie oben erwähnt, lediglich die Position des linken Regulierkörpers 24 geregelt und die Position des rechten Regulierkörpers 24a lediglich gesteuert, beispielsweise zu Beginne eines Arbeitsprozesses eingestellt. Vorzugsweise wird stets die Position desjenigen Regulierkörpers geregelt, der den zu erwärmenden Behältnissen 10 näher ist. Bevorzugt ist die örtliche Position des Regulierkörpers in seiner Längsrichtung verschiebbar.

## Patentansprüche

1. Vorrichtung (1) zum Erwärmen von Kunststoffbehältnissen (10) und insbesondere von Kunststoffvorformlingen mit einer Transporteinrichtung (2), welche die Kunststoffbehältnisse (10) entlang eines vorbestimmten Transportpfades transportiert, mit einer Mikrowellenerzeugungseinrichtung (4), mit einer Leitungseinrichtung (6), welche die Mikrowellen in Richtung der zu erwärmenden Kunststoffbehältnisse (10) leitet, wobei diese Leitungssinrichtung (6) wenigstens abschnittsweise als Hohlleiter ausgeführt ist,
**dadurch gekennzeichnet, dass**
die Vorrichtung (1) eine Steuereinrichtung (12) aufweist, welche derart gestaltet ist, dass sie die auf die Kunststoffbehältnisse (10) treffende Mikrowellenenergie während des Erwärmungsvorgangs steuert und die Steuereinrichtung eine Regeleinrichtung ist, welche die auf die Kunststoffbehältnisse (10) gelangende Mikrowellenenergie in Abhängigkeit, von einer von den Kunststoffbehältnissen (10) zurückgelangenden Mikrowellenenergie regelt, und wobei die Vorrichtung eine Sensoreinrichtung (20) aufweist, welche von den Kunststoffbehältnissen (10) zurückgelangende Mikrowellenenergie misst.

2. Vorrichtung (1) nach Anspruch 1,
**dadurch gekennzeichnet, dass**
die Vorrichtung (1) eine Energieabstimmungseinheit (14) aufweist, welche an einem Bereich der Leitungseinrichtung (6) angeordnet ist und welche die auf die Kunststoffbehältnisse treffende Mikrowellenenergie beeinflusst.

3. Vorrichtung (1) nach Anspruch 2,
**dadurch gekennzeichnet, dass** die Energieabstimmungseinheit (14) wenigstens einen in die Leitungseinrichtung (6) ragenden Regulierkörper (24, 24a) aufweist, dessen Position gegenüber dem Innenquerschnitt der Leitungseinrichtung (6) zur Leistungsabstimmung veränderbar ist.

4. Vorrichtung (1) nach Anspruch 3,
**dadurch gekennzeichnet, dass**
der Regulierkörper (24) mit Hilfe eines Linearmotors (26) gegenüber der Leitungseinrichtung (6) bewegbar ist.

5. Vorrichtung (1) nach wenigstens einem der vorangegangenen Ansprüche,
**dadurch gekennzeichnet, dass**
die Vorrichtung (1) einen Resonator (16) zur Erwärmung der Kunststoffbehältnisse (10) aufweist.

6. Vorrichtung (1) nach Anspruch 1
**dadurch gekennzeichnet, dass**
Regeleinrichtung (12) bewirkt, dass die Position des Regulierkörpers (24) der Energieabstimmungseinheit (14) gegenüber der Leitungseinrichtung (6) verändert wird.

7. Vorrichtung (1) nach wenigstens einem der vorangegangenen Ansprüche,
**dadurch gekennzeichnet, dass**
die Energieabstimmungseinheit (14) mehrere Regulierkörper (24, 24a) aufweist, deren Position gegenüber der Leitungseinrichtung (6) veränderbar ist.

8. Verfahren zum Erwärmen von Kunststoffbehältnissen (10) und insbesondere von Kunststoffvorformlingen (10), wobei die Kunststoffbehältnisse (10) mittels einer Transporteinrichtung (2) entlang eines vorbestimmten Pfads transportiert werden und mittels Mikrowellen erwärmt werden, welche von einer wikrowellenerzeugungseinrichtung (4) erzeugt und von einer Leitungseinrichtung (6) zu den Kunststoffbehältnissen (10) geleitet werden,
**dadurch gekennzeichnet, dass**
eine Steuereinrichtung (12) die auf die Kunststoffbehältnisse (10) treffende Mikrowellenenergie während des Erwärmungsvorgangs der Kunsstoffbehältnisse (10) in Abhängigkeit von einer von den Kunststoffbehältnissen (10) zurückgelangenen Mikrowellenenergie steuert, und wobei die Vorrichtung eine Sensoreinrichtung (20) aufweist, welche von den Kunststoffbehältnissen (10) zurückgelangende Mikrowellenenergie misst.

9. Verfahren nach Anspruch 8,
**dadurch gekennzeichnet, dass** die Mikrowellenenergie wenigstens einmal während des Erwärmungsvorgangs verändert wird.

10. verfahren nach wenigstens einem der vorangegangenen Ansprüche,
**dadurch gekennzeichnet, dass**
die auf die Behältnisse (10) gelangende Mikrowellenenergie mit Hilfe einer Energieabstimmungseinheit (14) verändert wird, wobei diese Energieabstimmungseinheit wenigstens einen Regulierkörper (24) aufweist, der in die Leitungseinrichtung (6) hineinragt und zur veränderung der Mikrowellenenergie die Position dieses Regulierkörper (24) gegenüber der Leitungseinrichtung (6) verändert wird.

11. Verfahren nach Anspruch 10,
**dadurch gekennzeichnet, dass**
die Energieabstimmungseinheit mehrere Regulierkörper (24, 24a) aufweist, jedoch nur die Position genau eines Regulierkörper (24) gegenüber der Leitungseinrichtung (16) während der Erwärmung der Kunststoffbehältnisse (10) verändert wird.

12. Verfahren nach wenigstens einem der vorangegangenen ansprüche,
**dadurch gekennzeichnet, dass**
die Position des Regulierkörpers (24) gegenüber der Leitungseinrichtung (16) in Abhängigkeit von einer von den Kunststoffbehältnissen (10) zurückgelangenen Mikrowellenenergie geregelt wird.

## Claims

1. An apparatus (1) for the heating of plastics-material containers (10) and, in particular, of plastics-material pre-forms with a conveying device (2) which conveys the plastics-material containers (10) along a pre-determined conveying path, with a microwave-producing device (4), with a conducting device (6) which conducts the microwaves in the direction of the plastics-material containers (10) to be heated, wherein this conducting device (6) is designed at least in sections in the form of a waveguide, **characterized in that** the apparatus (1) has a control device (12) which is designed in such a way that it controls the microwave energy reaching the plastics-material containers (10) during the heating procedure and that the control device is a regulating device which regulates the microwave energy reaching the plastics-material containers (10) as a function of a microwave energy coming back from the plastics material containers (10) and wherein the apparatus has a sensor device (20) which measures microwave energy coming back from the plastics material containers (10).

2. An apparatus (1) according to claim 1, **characterized in that** the apparatus (1) has an energy-adjustment unit (14) which is arranged in a region of the conducting device (6) and which influences the microwave energy reaching the plastics-material containers.

3. An apparatus (1) according to claim 2, **characterized in that** the energy-adjustment unit (14) has at least one regulating body (24, 24a) which projects into the conducting device (6) and the position of which is capable of being altered with respect to the internal cross-section of the conducting device (6) for the power adjustment.

4. An apparatus (1) according to claim 3, **characterized in that** the regulating body (24) is movable with respect to the conducting device (6) with the aid of a linear motor (26).

5. An apparatus (1) according to at least one of the preceding claims, **characterized in that** the apparatus (1) has a resonator (16) for heating the plastics-material containers (10).

6. An apparatus (1) according to claim 1, **characterized in that** the regulating device (12) has the effect that the position of the regulating body (24) of the energy-adjustment unit (14) is altered with respect to the conducting device (6).

7. An apparatus (1) according to at least one of the preceding claims, **characterized in that** the energy-adjustment unit (14) has a plurality of regulating bodies (24, 24a), the position of which with respect to the power device (6) is capable of being altered.

8. A method of heating plastics-material containers (10) and, in particular, plastics-material pre-forms (10), wherein the plastics-material containers (10) are conveyed along a pre-determined path by means of a conveying device (2) and are heated by means of microwaves which are produced by a microwave-producing device (4) and are conducted to the plastics-material containers (10) by a conducting device (6), **characterized in that** the control device (12) controls the microwave energy reaching the plastics-material containers (10) during the heating procedure of the plastics-material containers (10) as a function of a microwave energy coming back from the plastics material containers (10) and wherein the apparatus has a sensor device (20) which measures microwave energy coming back from the plastics material containers (10).

9. A method according to claim 8, **characterized in that** the microwave energy is altered at least once during the heating procedure.

10. A method according to at least one of the preceding claims, **characterized in that** the microwave energy reaching the containers (10) is altered with the aid of an energy-adjustment unit (14), wherein this energy-adjustment unit has at least one regulating body (24) which projects into the conducting device (6), and the position of this regulating member (24) with respect to the conducting device (6) is altered in order to alter the microwave energy.

11. A method according to claim 10, **characterized in that** the energy-adjustment unit has several regulating bodies (24, 24a), but only the position of precisely one regulating member (24) with respect to the conducting device (16) is altered during the heating of the plastics-material containers (10).

12. A method according to at least one of the preceding claims, **characterized in that** the position of the regulating body (24) with respect to the conducting device (16) is regulated in a manner dependent upon microwave energy returning from the plastics-material containers (10).

## Revendications

1. Dispositif (1) de chauffage de récipients (10) en matière plastique et en particulier de préformes en matière plastique, comprenant un dispositif de transport (2), lequel transporte les récipients (10) en matière plastique le long d'un chemin de transport prédéfini, un dispositif (4) de génération de microondes, un dispositif de guidage (6), lequel guide les microondes en direction des récipients (10) en matière plastique à chauffer, ce dispositif de guidage (6) étant réalisé au moins en sections sous la forme d'un guide d'onde,
**caractérisé en ce que**
le dispositif (1) présente un système de commande (12), lequel est configuré de manière à commander l'énergie des microondes incidente sur les récipients (10) en matière plastique pendant le processus de chauffage, et le système de commande est un système de régulation, lequel régule l'énergie des microondes parvenant aux récipients (10) en matière plastique en fonction d'une énergie des microondes revenant des récipients (10) en matière plastique, et le dispositif comprenant un système de détection (20), lequel mesure l'énergie des microondes revenue des récipients en matière plastique (10).

2. Dispositif (1) selon la revendication 1,
**caractérisé en ce que**
le dispositif (1) comprend une unité de réglage d'énergie (14), laquelle est disposée sur une zone du dispositif de guidage (6) et laquelle influence l'énergie des microondes incidente sur les récipients en matière plastique.

3. Dispositif (1) selon la revendication 2,
**caractérisé en ce que**
l'unité de réglage d'énergie (14) comporte au moins un corps de régulation (24, 24a) qui fait saillie dans le dispositif de guidage (6) et dont la position par rapport à la section transversale interne du dispositif de guidage (6) peut être modifiée pour le réglage de la puissance.

4. Dispositif (1) selon la revendication 3,
**caractérisé en ce que**
le corps de régulation (24) peut être déplacé par rapport au dispositif de guidage (6) à l'aide d'un moteur linéaire (26).

5. Dispositif (1) selon au moins l'une des revendications précédentes,
**caractérisé en ce que**
le dispositif (1) comporte un résonateur (16) destiné à chauffer les récipients (10) en matière plastique.

6. Dispositif (1) selon la revendication 1,
**caractérisé en ce que**
le dispositif de régulation (12) fait en sorte que la position du corps de régulation (24) de l'unité de réglage d'énergie (14) par rapport au dispositif de guidage (6) soit modifiée.

7. Dispositif (1) selon au moins l'une des revendications précédentes,
**caractérisé en ce que**
l'unité de réglage d'énergie (14) comporte plusieurs corps de régulation (24, 24a), dont la position par rapport au dispositif de guidage (6) peut être modifiée.

8. Procédé de chauffage de récipients (10) en matière plastique et en particulier de préformes (10) en matière plastique, les récipients en matière plastique (10) étant transportés au moyen d'un dispositif de transport (2) le long d'un chemin prédéfini et étant chauffés au moyen de microondes, lesquelles sont produites par un dispositif de génération de microondes (4) et sont guidées par un dispositif de guidage (6) en direction des récipients (10) en matière plastique,
**caractérisé en ce que**
un dispositif de commande (12) commande l'énergie des microondes incidente sur les récipients (10) en matière plastique pendant le processus de chauffage des récipients (10) en matière plastique en fonction d'une énergie des microondes revenue des récipients (10) en matière plastique, et le dispositif comportant un système de détection (20), lequel mesure l'énergie des microondes revenant des récipients (10) en matière plastique.

9. Procédé selon la revendication 8,
**caractérisé en ce que** l'énergie des microondes est modifiée au moins une fois pendant le processus de chauffage.

10. Procédé selon au moins l'une des revendications précédentes,
**caractérisé en ce que**
l'énergie des microondes parvenant aux récipients (10) est modifiée à l'aide d'une unité de réglage d'énergie (14), cette unité de réglage d'énergie comportant au moins un corps de régulation (24) qui fait saillie dans le dispositif de guidage (6) et, la position de ce corps de régulation (24) par rapport au dispositif de guidage (6) étant modifiée afin de modifier l'énergie des microondes.

11. Procédé selon la revendication 10,
**caractérisé en ce que**
l'unité de réglage d'énergie comporte plusieurs corps de régulation (24, 24a), mais seule la position d'un seul corps de régulation (24) par rapport au dispositif de guidage (16) pendant le chauffage des récipients (10) en matière plastique est modifiée.

12. Procédé selon au moins l'une des revendications précédentes,
**caractérisé en ce que**
la position du corps de régulation (24) par rapport au dispositif de guidage (16) est régulée en fonction d'une énergie des microondes revenue des récipients (10) en matière plastique.
